Europäisches Patentamt

European Patent Office

Office européen des brevets

(11) Publication number: **0 310 195**
**A2**

## (12) EUROPEAN PATENT APPLICATION

(21) Application number: 88202141.3

(22) Date of filing: 30.09.88

(51) Int. Cl.⁴: **B62B 3/00**

(30) Priority: 02.10.87 NL 8702354

(43) Date of publication of application:
05.04.89 Bulletin 89/14

(84) Designated Contracting States:
AT BE DE FR GB NL

(71) Applicant: HOZA B.V.
Haven n.z. 18
NL-9679 TC Scheemda(NL)

(72) Inventor: Kamminga, Klaas
Plantsoenlaan 1
NL-9679 HA Scheemda(NL)

(74) Representative: Smulders, Theodorus A.H.J.
et al
Vereenigde Octrooibureaux Nieuwe Parklaan
107
NL-2587 BP 's-Gravenhage(NL)

(54) A nestable roll container.

(57) A nestable roll container comprising an at least partly foldable bottom, two vertical side frames placed on either side of the bottom and adapted to hinge about a vertical shaft relatively to a rear frame portion and to be brought from a parallel, operating position into a diverging, nesting position. The container has two travelling wheels mounted underneath the rear frame portion and two front wheels, each mounted underneath a wheel plate extending inwardly at the front and the underside of each side frame. The bottom is provided at its front with a pull member situated underneath the bottom surface. The foldable portion of the bottom is provided with locking members adapted to coact with at least one side frame for preventing an upward swivelling movement of the bottom in the operating position of the roll container.

FIG.5

## A nestable roll container

This invention relates to a nestable roll container comprising an at least partly foldable bottom, two vertical side frames placed on either side of the bottom and adapted to hinge about a vertical shaft relatively to a rear frame portion and adapted to be brought from a parallel, operating position into a diverging, nesting position, said container having two travelling wheels mounted underneath the rear frame portion and two front wheels, each mounted underneath a wheel plate extending inwardly at the front and the underside of each side frame, the bottom front being provided with a pull member situated underneath the bottom surface.

A nestable roll container of this type is described in Dutch patent application 85,00419.

The known roll container is constructed in such a manner that the folding or swing-up bottom can only be lowered from its raised position when the side frames are simultaneously brought into the operating position or are already in the operating position. When the bottom is lowered, projections present at the underside of the bottom fall into corresponding openings in the wheel plates of the front wheels.

In this manner, the side frames are locked in the operating position and pulling forces exerted on the pull member are transmitted through the projections to the wheel plates and the rest of the frame, thereby relieving the bottom hinge.

Practice has shown that in certain situations, where such a nestable roll container is advanced along a given path through e.g. a machine shop by means of a pulling force acting on the pull member, there is the risk that the pulling force develops an upwardly directed component, as a result of which the swing-up bottom portion would then be capable of hinging slightly upwards, thereby possibly unlocking the side frames.

It is an object of the present invention to provide a nestable roll container which has been improved in this regard and in general to provide a robust and effective nestable roll container. To that end, according to the present invention, a nestable roll container of the above described type is characterized in that the foldable portion of the bottom is provided with locking members adapted to coact with at least one side frame to prevent an upward swinging movement of the bottom in the operating position of the roll container.

One embodiment of the present invention will now be described, by way of example, with reference to the accompanying drawings, in which:

Fig. 1 is a side elevational view of an example of a roll container;

Fig. 2 is a front elevational view of the roll container of Fig. 1;

Fig. 3 is a rear elevational view of the roll container of Fig. 1;

Fig. 4 is a top elevational view of the roll container of Fig. 1;

Fig. 5 shows the bottom of a roll container according to the present invention; and

Fig. 6 is a detail view.

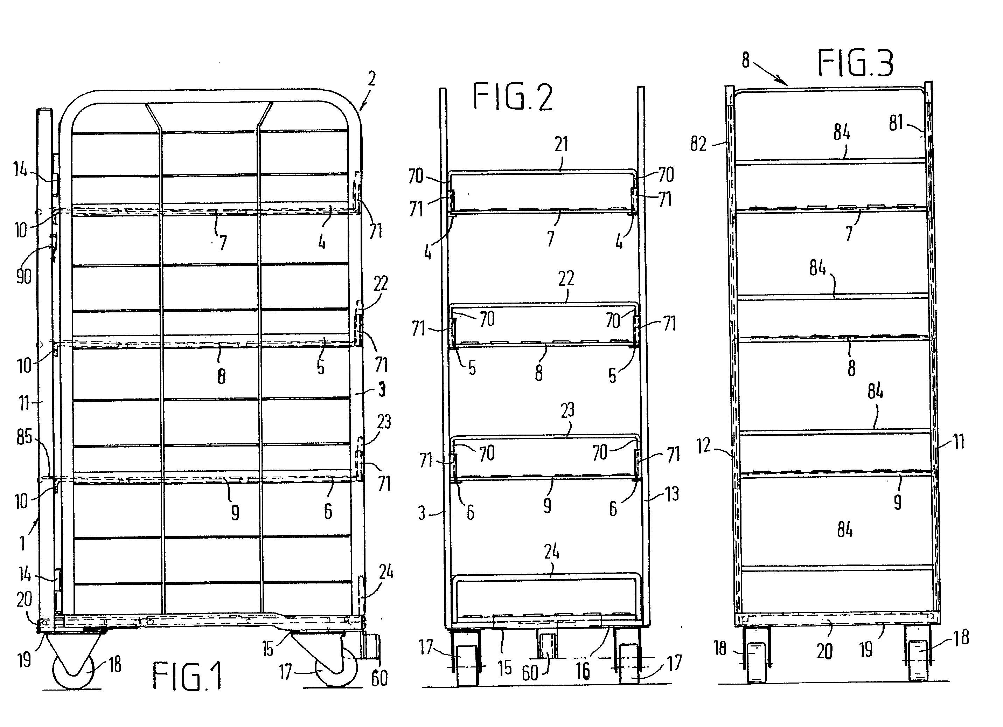

The general construction of the nestable container shown in Figs. 1-4 roughly corresponds with the roll container described and shown in Dutch application 85,00419 or Dutch application 85,01404. The roll container will therefore be described hereinafter only briefly, at least as far as aspects are concerned, which need not be explained in detail for a proper understanding of the present invention.

Fig. 1 is a side elevational view of a roll container having a rear frame 1 and a (left-hand) side frame 2. The side frame, like the other side frame not shown in Fig. 1, is constructed conventionally from a substantially rectangular vertical frame 3 formed from a rectangular tube, and having rounded top corners. Within frame 3 extend horizontal and vertical connecting wires. Besides, there are provided three horizontal carriers 4,5,6, formed in known manner from angle iron, which support pallets when in the operating position. The pallets are shown in Fig. 1 at 7,8 and 9 by broken lines.

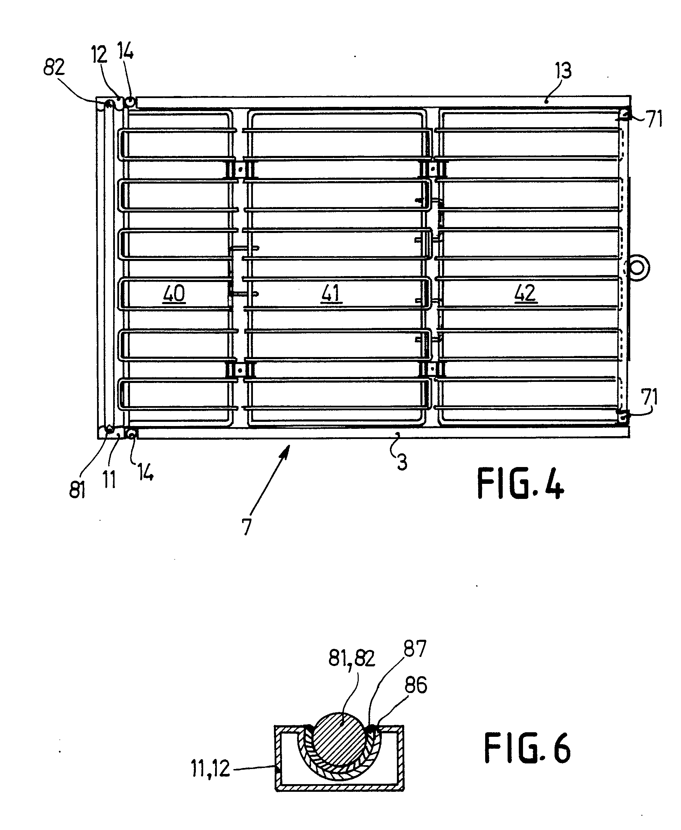

Fig. 4 shows in greater detail the upper pallet 7 consisting, like the other pallets, of a fixed rear portion 40, a central portion 41 and a front portion 42. The front and the central portion can be folded in known manner. In this example the rear portion is welded in horizontal position to the rear wall, as shown in Fig. 1 at 10.

The rear wall will be described further hereinafter. However, it is already observed that the rear wall comprises two uprights 11,12, which are each positioned at a rear corner of the roll container and extend vertically.

The left-hand side frame 3, like the right-hand side frame 13 (Fig. 3, Fig. 4) is attached through hinges 14 to the corresponding upright 11,12 of the rear wall in such a manner that the side walls can swing outwardly, at least when no locking mechanism is provided.

Each side wall carries at the front and the bottom an inwardly extending, substantially horizontal wheel plate 15,16. In this example, swivelling wheels 17 are mounted underneath the wheel plates.

At the rear too, the roll container is provided with wheels 18, which are mounted near the rear corners of the container underneath a plate 19 of a rear frame member. Plate 19 has at its back an upright edge 20 and connects the two uprights 11,12 of the rear frame.

The container shown is of the type having no front frame or front door but which is open at the front. To prevent articles placed on the pallets, such as cartons of milk or the like from falling unintentionally off the container, the front portion 42 of each pallet has a bow-shaped upright front rail 21,22,23. The bottom of the container, not described yet, also has such a bow-shaped front rail 24.

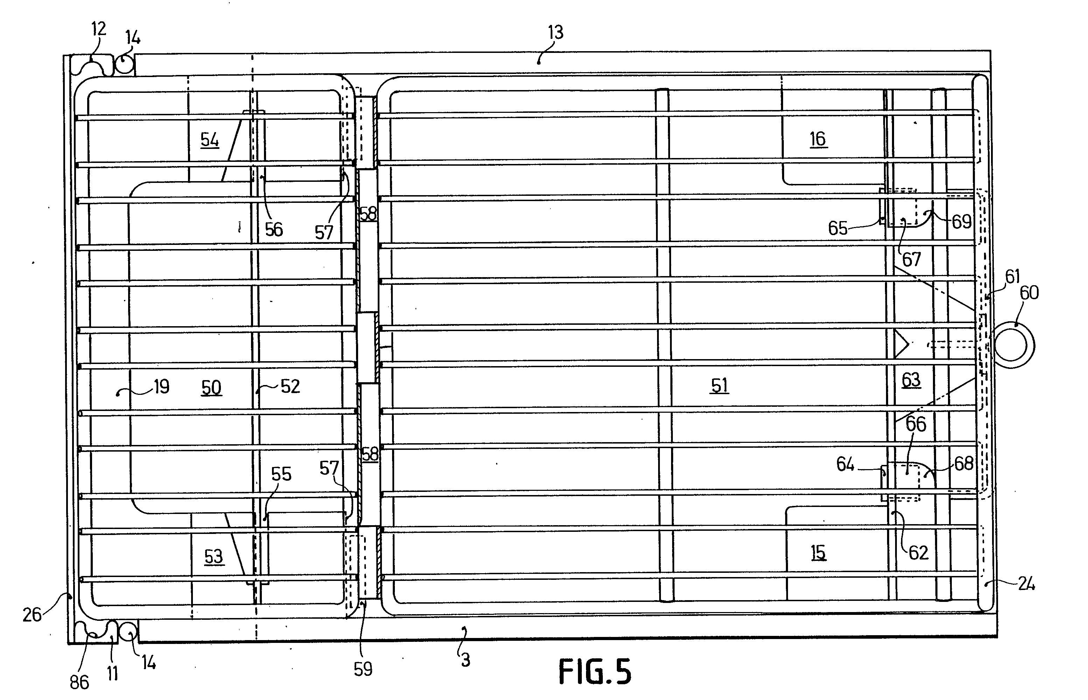

The bottom of the roll container of Figs. 1-4 is shown in Fig. 5. The bottom is constructed similarly to that shown in Fig. 4 of Dutch application 85,00419, and comprises a fixed rear portion 50 and a foldable front portion 51 hinged to it. The rear portion extends over plate 19 of the rear frame member, which plate is U-shaped in top plan view in this example, and is welded to the upright rear edge 20. The rear bottom portion 50 further has a depending cross strip 52, which is also welded to the legs of the U-shaped plate 19.

In a similar manner to that described in the above Dutch patent application 85,00419, the depending cross strip 52 coacts with plates 53,54 extending between plate 19 and the rear bottom portion 50 on either side of the roll container, said plates having a nick 55,56, each falling around an end of the cross strip. Plates 53,54 are each welded to a side frame and the nicks permit a limited outward swinging movement of the side frames.

Plates 53,54 each further have a front edge 57 coacting in a similar fashion to that described in Dutch patent application 85,00419, with a lug 59 provided at the level of the hinged joint 58 with the front bottom portion 51, said lug rotating along with the front bottom portion.

Lugs 59 permit a slight outward swivelling movement of the side frames when the bottom is in the lowered position and a larger outward swivelling movement into the nesting position when the front bottom portion is entirely swung up.

The front bottom portion 51 has at its front the upright bow 24 already described. The front bottom portion is further provided at its front and bottom with a pull member, being a drawbar eye 60 in this example. In order that the forces exerted, in operation, on drawbar eye 60 may be taken up, the drawbar eye is preferably connected to the front bottom portion through a reinforcement construction.

In the example shown, the reinforcement construction comprises a front cross strip 61, a second cross strip 62 provided some way behind the front cross strip, and disposed underneath the bottom surface, and a trapezoidal plate 63 welded between the front and the second cross strip.

Fig. 5 further shows the front wheel plates 15 and 16 extending inwardly from the front and bottom of side frames 3,13. In operation, the front bottom portion 51 bears on wheel plates 15 and 16. In the example shown, the front bottom portion has its second cross strip 62 supported on wheel plates 15,16.

To prevent the front bottom portion from hinging upwards under the influence of the force exerted, in operation, on the drawbar eye, the front bottom portion is provided at its underside with two downwardly extending hooked members 64,65, each having a bent portion 66,67 engaging underneath one of the wheel plates 15,16.

In principle, the hooked members can engage around any free edge of the wheel plates or possibly around an edge of a cut-out specially provided in the wheel plates. In the example shown, each hooked member is formed from a downwardly extending metal strip bent at the lower end and welded to the second cross strip 62, the bent end 66,67 engaging underneath an inwardly extending ear 68,69 formed on the corresponding wheel plate.

To swing up the front bottom portion from the lowered position shown in Fig. 5, in order to bring the roll container into the nesting position, first the side frames are swung outwards. As already described, after releasing a possible locking, this can be effected to a certain extent due to the location of lugs 59 relative to the front edges 57 of plate 19. The deflection should naturally be large enough to bring the ears 68,69 of the front wheel plates beyond the reach of the hooked members 64,65. Subsequently, the front bottom portion is swung up entirely. The side frames can then be swung further outwardly into the nesting position.

We have already mentioned a lock for preventing the side frames from swinging outwardly unintentionally. Such locking can be realized in various manners.

In the embodiment shown, use is made, with advantage, of the vertical portions of the upright bow-shaped front rails of the pallets.

As best shown in Fig. 2, said vertical portions 70 extend along the front vertical frame members of side frames 3,13. Engaging about each vertical bow portion 70 is a locking hook 71 attached to the corresponding side frame member, which hook, in the example shown, is formed from a vertically arranged piece of angle iron having the free edge of one flange welded to the side frame member and whose other flange extends rearwardly within the roll container.

In this manner, it is accomplished that the side frames are secured by the pallets against swinging aside unintentionally. Only when the pallets have been swung up can the side frames be swung aside into a first position, wherein the bottom can be swung up, and afterwards into the nesting position.

The container shown in the drawings is adapted to be loaded with an automatic loading device via the rear. To that end, there is positioned between the uprights 11,12 of the rear frame a wall 80 (Fig. 3) which is slidable up and down. Wall 80 comprises two vertical legs 81,82 connected by horizontal cross bars 84.

In the lowest position of the rear wall 80 bars 84, as shown in Fig. 3, are at some interspace above the bottom and the pallets.

For the purpose of loading the roll container, the rear wall is raised until the bars 84 are precisely at the level of the pallets. The raising may be effected by a loading device. If desired, stops and/or detents may be provided which maintain the rear wall in the loading position. Such a stop may be e.g. a rearwardly extending projection on one of the pallets, as shown in Fig. 1 at 85.

The vertical legs 81,82 of the rear wall are received between the facing surfaces of uprights 11,12, which, as shown in Figs. 3 and 5, to that end have a cavity 86 partly enclosing the vertical legs.

Preferably, the cavity of uprights 11,12 contains a plurality of synthetic plastics bearing blocks, each extending some distance in longitudinal direction.

For the sake of clarity, Fig. 6 shows, in crosssectional view, an upright 11,12 having a concave wall 86, a synthetic plastics bearing cup 87 placed within the cavity and a leg 81,82 of the rear wall.

For locking the rear wall in the loading position, use can be made of a pin attached to a leaf spring, said pin engaging through a bore in an upright 11,12 springingly in a blind bore in a leg 81,82.

Such a construction is shown in Fig. 1 at 90.

It is observed that in view of the above, various modifications will readily occur to those skilled in the art.

For instance, the hooked members of the bottom may in principle also engage directly underneath or in the side frames. In the latter case, the members need not necessarily be hooked. Such modifications are deemed to be within the scope of the present invention.

## Claims

1. A nestable roll container comprising an at least partly swing-up bottom, two vertical side frames placed on either side of the bottom and adapted to hinge about a vertical shaft relatively to a rear frame portion and to be brought from a parallel operating position into a diverging nesting position, the container having two travelling wheels mounted underneath the rear frame portion and two front wheels each mounted underneath a wheel plate extending inwardly at the front and underside of each side frame, the bottom being provided at its front with a pull member situated underneath the bottom surface, characterized in that the foldable portion of the bottom is provided with locking members adapted to coact with at least one side frame for preventing an upward swivelling of the bottom in the operating position of the roll container.

2. A roll container as claimed in claim 1, characterized in that the locking members are hooked members provided underneath the foldable portion of the bottom.

3. A roll container as claimed in claim 2, characterized in that, in the operating position, the hooked members engage underneath an edge of the wheel plates of the front wheels.

4. A roll container as claimed in claim 3, characterized in that each wheel plate has an inwardly extending ear which, when the side frames are brought from a swivelled-out position into the operating position, with the bottom being in the swung-down position, falls into a hooked member.

5. A roll container as claimed in claim 4, characterized in that each hooked member comprises a strip extending downwards from the bottom, said strip being bent forwardly at some interspace underneath the bottom and being adapted to engage about a rear edge of an ear of a wheel plate.

6. A roll container as claimed in any one of claims 2-5, characterized in that the hooked members are attached to an upright cross strip provided in the bottom and extending underneath the bottom.

7. A roll container as claimed in any of the preceding claims, comprising at least one foldable pallet, characterized in that the front portion of the pallet has a bow-shaped upright front edge whose vertical side portions, in the operating position, fall into securing hooks provided on the front uprights of the side frames, said hooks preventing the side frames from swinging outwardly.

8. A roll container as claimed in claim 7, characterized in that the securing hooks consist of angle irons having one flange extending inwardly from the side frame and whose other flange extends rearwardly at some interspace from the side frame.

9. A roll container as claimed in any of the preceding claims, comprising a sliding wall mounted between two rear uprights on the rear frame portion, said sliding wall being adapted for up and down sliding movement between a closing position and a loading position, characterized in that the rear uprights have facing surfaces which are concave in cross section and which each partly enclose a vertical leg of the sliding wall.

10. A roll container as claimed in claim 9, characterized in that the concave portions of the rear uprights contain one or more snugly fitting, synthetic plastics bearing cups which retain and guide the legs of the sliding wall.

11. A roll container as claimed in claim 9 or 10, characterized by a detent comprising a leaf spring mounted against a rear upright, said spring having a pin extending through a bore into the upright, said pin being adapted to extend into a blind bore in a leg of the sliding wall.

EP 0 310 195 A2

**FIG.4**

**FIG.6**

FIG.5

EP 0 310 195 A2